# EUROPÄISCHE PATENTSCHRIFT

(11) **EP 0 500 519 B1**
(45) Veröffentlichungstag und Bekanntmachung des Hinweises auf die Patenterteilung: **22.02.1995**
(21) Anmeldenummer: 92890041.4
(22) Anmeldetag: 19.02.1992
(51) Int. Cl.: F16K 13/00, F16K 29/02, F16K 31/02

(54) **Ventil**
Valve
Soupape

(30) Priorität: 19.02.1991 AT 341/91
(43) Veröffentlichungstag der Anmeldung: 26.08.1992
(73) Patentinhaber: HOERBIGER FLUIDTECHNIK GmbH, 86956 Schongau (DE)
(72) Erfinder: Bauer, Friedrich, Dipl.-Ing. Dr., A-1238 Wien (AT)
(74) Vertreter: Klein, Adam, Dipl.Ing.

(56) Entgegenhaltungen:
- EP-A- 0 342 264
- EP-A- 0 370 395
- AT-B- 226 169
- DE-A- 3 608 550
- GB-A- 2 194 023

## Beschreibung

Die Erfindung betrifft ein Ventil zur Absperrung bzw. Steuerung eines Fluidstromes, mit einem je einen Zu- und Ablauf für den zu steuernden Fluidstrom aufweisenden Gehäuse, einem zwischen Zu- und Ablauf angeordneten Steuerorgan, und einem Betätigungselement für das Steuerorgan. Ein solches Ventil ist aus der GB-A-2 194 023 bekannt.

Insbesonders in den letzten Jahren sind Ventile bekannt geworden, die beispielsweise unter Ausnutzung des umgekehrten Piezoeffektes die Beeinflussung eines Steuerorganes für einen Fluidstrom entsprechend einer angelegten Spannung erlauben. Der umgekehrte Piezoeffekt hat den Vorteil, mit nur geringer elektrischer Energie für die Betätigung des Steuerorganes auszukommen, womit aber der Nachteil einhergeht, daß nur relativ kleine Verformungen bzw. Verstellwege möglich sind. Zur Berücksichtigung dieses Umstandes sind entweder Hebelübersetzungen oder dergleichen vorzusehen, um den Veränderungsbereich der zu steuernden Querschnitte ausreichend zu vergrößern - was die Ventile kompliziert und anfällig macht - oder es ist das Ventii von vorneherein nur als Vorsteuerventil für kleine Querschnitte bzw. Fluidmengenströme ausgelegt und zu verwenden. Ähnliche Vor- bzw. Nachteile sind auch beispielsweise bei einer Betätigung des Steuerorganes über andere geeignete Betätigungselemente, welche etwa die Wärmeausdehnung (Bimetalle u. dgl.) oder das sogenannte Formgedächtnis (Memory-Metalle) ausnutzen, zu erwarten.

Aufgabe der vorliegenden Erfindung ist es, ein Ventil der eingangs genannten Art so auszugestalten, daß unter Beibehaltung der Vorteile der einfachen Betätigung bzw. Steuerung die erwähnten Nachteile vermieden werden und daß insbesonders mit möglichst geringem konstruktivem Aufwand eine Steuerung auch relativ großer Fluidmengenströme möglich wird.

Dies wird gemäß der Erfindung dadurch erreicht, daß das Steuerorgan einen vom Fluidstrom durchströmten Verdränger-Fluidmotor aufweist, und daß das Betätigungselement im Bereich eines vom Fluidstrom bewegbaren Verdrängerelementes dieses Fluidmotors angeordnet ist und bei seiner Betätigung dieses Verdrängerelement zumindest mittelbar blockiert bzw. freigibt.

Anstelle der eingangs erwähnten, konstruktiv aufwendigen und schwer justierbaren Hebelübersetzungen oder dergleichen für die Vergrößerung des Steuerbereiches beispielsweise eines piezoelektrischen Betätigungselementes wird hier nun also über eine spezielle Ausgestaltung des Steuerorganes, bzw. die darauf abgestimmte Einwirkung des Betätigungselementes auf dieses Steuerorgan, die Ventilausbildung unmittelbar an den vorgegebenen kleinen Bewegungs- bzw. Verstellbereich des Piezoelementes im Betätigungselement adaptiert. Die Ausdehnung bzw. Kontraktion des eigentlichen Piezoelementes (bzw. eines Bimetall- oder Memorymetall-Elementes) wird zum Klemmen bzw. Freigeben eines normalerweise bei der Durchströmung des Fluids bewegten Verdrängerelementes verwendet. Blockiert man auf diese Weise die Bewegung des nach dem Verdrängerprinzip arbeitenden Fluidmotors, so erhält man ein Ventil, das bei laufendem Fluidmotor eine dem Motorverbrauch (Schluckmenge, Durchgangsmenge) entsprechende Fluidmenge durchläßt und bei blockiertem Motor je nach Konstruktion mehr oder weniger dicht schließt. Da es nicht Aufgabe dieses Fluidmotors ist, mechanische Leistung abzugeben, wird das tatsächlich verwendete Prinzip des Fluidmotors nicht im Hinblick auf den Wirkungsgrad, sondern auf Einfachheit, Motorverbrauch, Dichtheit im blockierten Zustand usw. ausgewählt. Abgesehen von allen möglichen Arten von Luft-, Gas-, Flüssigkeits- oder Ölmotoren können im Rahmen der Erfindung aber durchaus auch beispielsweise mit Druckluft betriebene Dampfmaschinen, deren Kolben, Schwungrad, od. dgl., vom Betätigungselement gebremst wird, verwendet werden.

In diesem Zusammenhang besonders vorteilhaft ist eine weitere Ausgestaltung der Erfindung, gemäß welcher der Fluidmotor von einer Drehkolbenmaschine, vorzugsweise nach dem Prinzip einer Zahnradpumpe oder eines Rootsgebläses, gebildet ist. Derartige Drehkolbenmaschinen sind ohne besonderen Aufwand ziemlich reibungsarm und dicht herzustellen und im Betrieb sehr wartungsarm. Zumindest das Verdrängerelement des Fluidmotors kann in weiterer Ausbildung der Erfindung als Masse-Präzisionsteil, insbesonders aus Keramik, ausgeführt sein, was das Ventil insgesamt einfach, wartungsfrei und preiswert macht.

Die wegen der bereits eingangs erwähnten, nur geringen Längenausdehnung beispielsweise des eigentlichen Piezoelementes bei Änderung zwischen Ruhe- und Betriebsspannung erforderliche Präzision kann nach einer bevorzugten weiteren Ausbildung der Erfindung dadurch erreicht werden, daß das Verdrängerelement bzw. der Drehkolben und/oder das Gehäuse des Fluidmotors aus ebenen Scheiben zusammengesetzt ist, deren äußere Begrenzungsflächen gemeinsam bearbeitet, vorzugsweise geschliffen oder geläppt, sind.

Das Betätigungselement kann nach einer anderen Weiterbildung der Erfindung exzentrisch zur Achse des Drehkolbens angeordnet sein, was beispielsweise Anordnungen analog zur bekannten Scheibenbremse ermöglicht.

Nach einer anderen Ausbildung der Erfindung kann das Betätigungselement aber auch zentrisch zur Achse des Drehkolbens angeordnet und vorzugsweise als Hülse oder abgesetzte Welle ausgebildet sein. Damit läßt sich bevorzugt eine in axialer Richtung erfolgende Verstellung des Drehkolbens, einer Achse des Drehkolbens, eines Lagers oder dergleichen erreichen und beispielsweise eine seitliche Klemmung eines der genannten Teile an einem gehäusefesten Teil zur Blockierung des Verdrängerelements herbeiführen.

Gemäß einer bevorzugten weiteren Ausbildung der Erfindung kann das Betätigungselement auch mehrere separat angeordnete einzelne Elemente aufweisen, wobei deren Anordnung und Wirkung auf die Ermöglichung bzw. Blockierung der Durchströmung des Steuerorganes in weiten Grenzen variiert und an die jeweiligen Erfordernisse angepaßt werden kann.

Die Betätigungselemente von zwei in Strömungsrichtung des Fluidstromes hintereinander angeordneten Fluidmotoren können in weiterer Ausbildung der Erfindung gemeinsam gegengleich angesteuert sein, sodaß einer frei ist, während der andere blockiert wird und umgekehrt. Damit ist auf einfachste Weise ein 3-Wegeventil geschaffen.

Im letztgenannten Zusammenhang ist nach einer besonders bevorzugten Ausbildung der Erfindung vorgesehen, daß die beiden Fluidmotoren räumlich nebeneinander angeordnet sind und daß jeweils ein gemeinsames Betätigungselement zur gegengleichen Beeinflussung beider Fluidmotoren vorgesehen ist. Das Betätigungselement, das den einen Fluidmotor blockiert, kann damit gleichzeitig den anderen freigeben, was die Gesamtausbildung eines derartigen Ventils weiter vereinfacht.

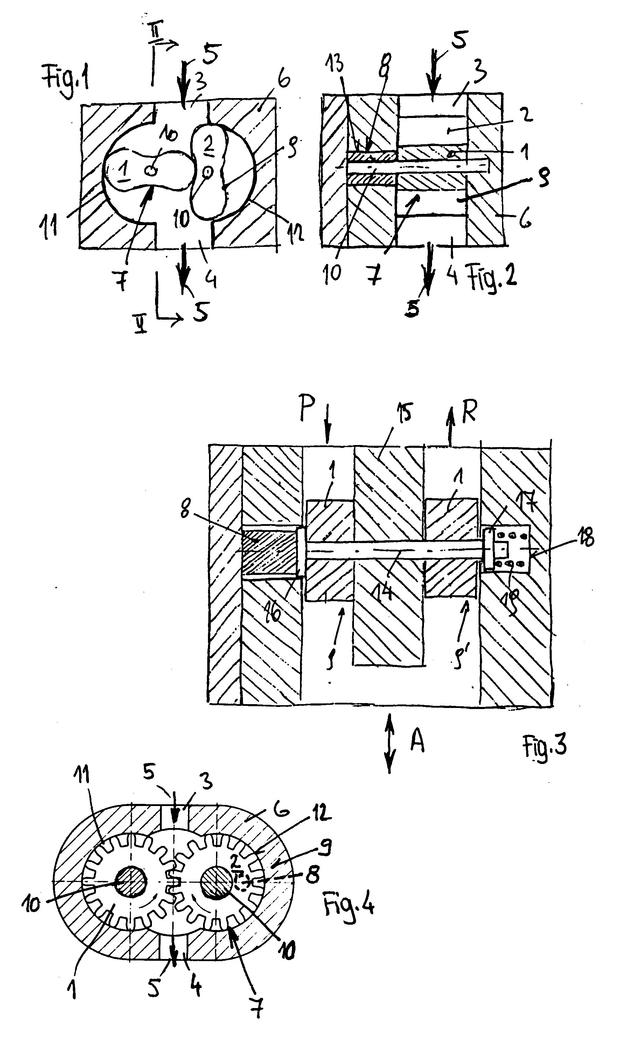

Die Erfindung wird im folgenden noch anhand der in der Zeichnung schematisch dargestellten Ausführungsbeispiele näher erläutert. Fig. 1 zeigt dabei einen Schnitt durch ein Ventil gemäß der Erfindung, Fig. 2 einen Schnitt entlang der Linie II-II in Fig. 1, und Fig. 3 und 4 einen Schnitt durch je ein anderes Ausführungsbeispiel.

Das in den Fig. 1 und 2 nur schematisch dargestellte Ventil zur Absperrung bzw. Steuerung eines Fluidstromes besteht im wesentlichen aus einem, je einen Zu- und Ablauf 3,4 für den zu steuernden Fluidstrom (angedeutet durch die Pfeile 5) aufweisenden Gehäuse 6, einem zwischen Zu- und Ablauf 3, 4 angeordneten Steuerorgan 7 und einem piezoelektrischen Betätigungselement 8 für das Steuerorgan 7. Das Steuerorgan 7 weist einen vom Fluidstrom (5) durchströmten Verdränger-Fluidmotor 9 auf, der hier von einem Rootsgebläse gebildet ist.

Das Rootsgebläse des Fluidmotors 9 besteht im wesentlichen aus zwei auf nicht weiter dargestellte Weise in ihrer Drehbewegung gekoppelten Verdrängerelementen 1, 2, die um Achsen 10 drehbar im Gehäuse 6 gelagert sind und mit Ausnehmungen 11, 12 im Gehäuse 6 zusammenwirken.

Das Betätigungselement 8, welches hier zumindest ein zufolge des umgekehrten Piezoeffektes auf Spannungsänderungen reagierendes Piezoelement enthält, ist im Bereich eines (hier 1) der vom Fluidstrom (5) bewegbaren Verdrängerelemente in einer um die Achse 10 vergrößerten Bohrung 13 angeordnet und dient bei elektrischer Betätigung zum Blockieren bzw. Freigeben der freien Verdrehbarkeit des Verdrängerelementes 1 und damit des gesamten Fluidmotors 9. So kann beispielsweise bei angelegter Spannung an das Betätigungselement 8 (die elektrische Kontaktierung sowie die zugehörigen Leitungen sind nicht dargestellt) eine reibschlüssige Festklemmung der Achse 10 vorgenommen werden. Die Reibkraft hängt dabei auch von der Oberflächenbeschaffenheit (Rauheit) der insgesamt jeweils zusammenwirkenden Flächen der Reibpartner ab. Davon abgesehen wäre aber natürlich auch eine ganz oder teilweise formschlüssige Anhaltung an einer beispielsweise mit Nuten oder Riefen versehenen Oberfläche möglich.

Bei laufendem Fluidmotor wird eine dem sogenannten Motorverbrauch entsprechende Fluidmenge durchgelassen, wogegen bei blockiertem Fluidmotor dieser Durchlaß mehr oder weniger dicht abgeschlossen ist. Im Hinblick auf Einfachheit, Motorverbrauch, Dichtheit im blockierten Zustand, usw., können natürlich auch weitgehend beliebige Abwandlungen des als Drehkolbenmaschine, und hier insbesonders als Rootsgebläse, dargestellten Fluidmotors Verwendung finden.

Die beiden Verdrängerelemente 1, 2 bzw. auch das Gehäuse 6 können aus Dichtheits- und/oder Kostengründen auch als Masse-Präzisionsteile, insbesonders aus Keramik, ausgeführt sein, wobei auch eine aus ebenen Scheiben zusammengesetzte Sandwichbauweise Verwendung finden kann, bei der die äußeren Begrenzungs- bzw. Dichtflächen der einzelnen Teile jeweils für alle Schichten gemeinsam bearbeitet, vorzugsweise geschliffen oder geläppt, werden können.

Abweichend von der dargestellten Ausführung der Anordnung des Betätigungselementes 8 als Hülse um die für die Festsetzung des Fluidmotors zu klemmende Achse könnte aber beispielsweise auch eine Art Bremsscheibe an dieser Achse angebracht werden, auf die das dann exzentrisch zur Achse des Drehkolbens liegende Betätigungselement bedarfsweise einwirkt. Dabei könnten auch mehrere einzelne Piezoelemente in verschiedenen Winkelstellungen bzw. auch an mehreren derartigen Scheiben oder dergleichen zum Einsatz kommen.

Bei dem in Fig. 3 nur schematisch und teilweise dargestellten Ventil sind zwei Fluidmotoren 9, 9' in einer prinzipiell beispielsweise der Ausführung nach den Fig. 1 und 2 entsprechenden Ausbildung räumlich nebeneinander angeordnet, wobei hier nun ein gemeinsames Betätigungselement 8 zur gegengleichen Beeinflussung beider Fluidmotoren 9, 9' vorgesehen ist. Zu diesem Zwecke sind die Verdrängerelemente 1 auf einer gemeinsamen Achse 14 angeordnet, welche einen Gehäuseteil 15 durchsetzt und an beiden Enden Ansätze 16, 17 aufweist. Auf der linken Seite ist die Achse 14 über den Ansatz 16 vom Betätigungselement 8 durch dessen Expansion bei Anlegen einer Spannung mit Kraft beaufschlagbar und um ein geringes Maß nach rechts gegen die Kraft einer in einer Ausnehmung 18 angeordneten Feder 19 verschiebbar. Die Rückstellung der Achse 14 sowie der darauf angeordneten Verdrängerelemente 1 nach links erfolgt über den Ansatzteil 17 bzw. die darauf einwirkende Feder 19.

In der in Fig. 3 dargestellten rechten Endstellung ist der linke Fluidmotor 9 durch Anlage des Verdrängerelementes 1 am Gehäuseteil 15 blockiert - der rechte Fluidmotor 9' ist frei, womit sich eine Rückströmmöglichkeit vom Anschluß A zum Anschluß R ergibt und der Anschluß P gesperrt ist. In der anderen, nicht dargestellten, linken Endstellung ist der Zulauf P zum Anschluß A frei und der Rücklauf R gesperrt. Es handelt sich also um ein 3/2-Wegeventil, das ohne Vorsteuerventil piezoelektrisch betätigt ist und durchaus auch für größere Fluidströme verwendet werden kann.

Auch zu Fig. 3 ist wiederum darauf hinzuweisen, daß verschiedene andere Anordnungen bzw. Ausführungen sowohl des Betätigungselementes als auch der Fluidmotoren möglich sind.

In Fig. 4 ist schließlich in einer der Fig. 1 entsprechenden Darstellung eine bevorzugte Ausbildung des erfindungsgemäßen Ventils mit einem in Form einer Zahnradpumpe ausgeführten Fluidmotor 9 gezeigt. Die beiden Verdrängerelemente 1 und 2 sind hier Zahnräder, die auf den Achsen 10 frei drehbar gelagert sind. Das piezoelektrische Betätigungselement 8 ist exzentrisch zum Verdrängerelement 2 im Gehäuse 6 angeordnet, wie in der Zeichnung gestrichelt angedeutet ist, und wirkt auf das Verdrängerelement 2 zwecks Blockierung desselben. Das oder die Verdrängerelemente können aber auch bei diesem Ausführungsbeispiel analog zu den Fig. 2 und 3 ausgebildet und angeordnet sein.

## Patentansprüche

1. Ventil zur Absperrung bzw. Steuerung eines Fluidstromes, mit einem je einen Zu- und Ablauf für den zu steuernden Fluidstrom aufweisenden Gehäuse, einem zwischen Zu- und Ablauf angeordneten Steuerorgan, und einem Betätigungselement für das Steuerorgan, dadurch gekennzeichnet, daß das Steuerorgan (7) einen vom Fluidstrom (5) durchströmten Verdränger-Fluidmotor (9) aufweist, und daß das Betätigungselement (8) im Bereich eines vom Fluidstrom (5) bewegbaren Verdrängerelementes (1) dieses Fluidmotors (9) angeordnet ist und bei Betätigung dieses Verdrängerelement (1) zumindest mittelbar blockiert bzw. freigibt.

2. Ventil nach Anspruch 1, dadurch gekennzeichnet, daß der Fluidmotor (9) von einer Drehkolbenmaschine, vorzugsweise nach dem Prinzip einer Zahnradpumpe oder eines Rootsgebläses, gebildet ist.

3. Ventil nach Anspruch 1 oder 2, dadurch gekennzeichnet, daß zumindest das Verdrängerelement (1,2) des Fluidmotors (9) als Masse-Präzisionsteil, insbesonders aus Keramik, ausgeführt ist.

4. Ventil nach Anspruch 2 oder 3, dadurch gekennzeichnet, daß das Verdrängerelement (1,2) bzw. der Drehkolben und/oder das Gehäuse (6) des Fluidmotors (9) aus ebenen Scheiben zusammengesetzt ist, deren äußere Begrenzungsflächen gemeinsam bearbeitet, vorzugsweise geschliffen oder geläppt, sind.

5. Ventil nach einem oder mehreren der Ansprüche 2 bis 4, dadurch gekennzeichnet, daß das Betätigungselement (8) exzentrisch zur Achse (10,14) des Drehkolbens angeordnet ist.

6. Ventil nach einem oder mehreren der Ansprüche 2 bis 4, dadurch gekennzeichnet, daß das Betätigungselement (8) zentrisch zur Achse (10,14) des Drehkolbens angeordnet und vorzugsweise als Hülse oder abgesetzte Welle ausgebildet ist.

7. Ventil nach einem oder mehreren der Ansprüche 1 bis 6, dadurch gekennzeichnet, daß das Betätigungselement (8) mehrere separat angeordnete einzelne Elemente aufweist.

8. Ventil nach einem oder mehreren der Ansprüche 1 bis 7, dadurch gekennzeichnet, daß die Betätigungselemente (8) von zwei in Strömungsrichtung des Fluidstromes (5) hintereinander angeordneten Fluidmotoren (9,9') gemeinsam gegengleich angesteuert sind.

9. Ventil nach Anspruch 8, dadurch gekennzeichnet, daß die beiden Fluidmotoren (9,9') räumlich nebeneinander angeordnet sind und daß jeweils ein gemeinsames Betätigungselement (8) zur gegengleichen Beeinflussung beider Fluidmotoren (9,9') vorgesehen ist.

## Claims

1. A valve for halting or controlling a stream of fluid, having a housing with both an inflow and an outflow for the stream of fluid to be controlled, a control member arranged between inflow and outflow, and an actuating element for the control member, characterised in that the control member (7) has a displacement fluid motor (9) through which there flows the stream of fluid (5), and in that the actuating element (8) is arranged in the region of a displacement element (1), movable by the stream of fluid (5), of this fluid motor (9) and upon actuation at least indirectly blocks or releases this displacement element (1).

2. A valve in accordance with Claim 1, characterised in that the fluid motor (9) is formed by a rotating piston machine, preferably in accordance with the principle of a gear pump or a Roots blower.

3. A valve in accordance with Claim 1 or 2, characterised in that at least the displacement element (1, 2) of the fluid motor (9) is in the form of a mass-produced precision pail, preferably of ceramic.

4. A valve in accordance with Claim 2 or 3, characterised in that the displacement element (1, 2) or the rotary piston and/or the housing (6) of the fluid motor (9) is composed of plane discs whose outer boundary surfaces are processed together, preferably ground or lapped.

5. A valve in accordance with one or a plurality of Claims 2 to 4, characterised in that the actuating element (8) is arranged eccentric to the axis (10, 14) of the rotary piston.

6. A valve in accordance with one oil a plurality of Claims 2 to 4, characterised in that the actuating element (8) is arranged concentric to the axis (10, 14) of the rotary piston and is preferably in the form of a sleeve or stepped shaft.

7. A valve in accordance with one or a plurality of Claims 1 to 6, characterised in that the actuating element (8) has a plurality of separately arranged individual elements.

8. A valve in accordance with one or a plurality of Claims 1 to 7, characterised in that the actuating elements (8) are jointly activated, in an inverse manner, by two fluid motors (9,9') arranged behind one another in the direction of flow of the stream of fluid (5).

9. A valve in accordance with Claim 8, characterised in that the two fluid motors (9, 9') are arranged spatially alongside one another and in that in each case a common actuating element (8) is provided to inversely influence both fluid motors (9,9').

## Revendications

1. Valve pour le blocage ou la commande d'un écoulement de fluide, comprenant un boîtier comportant une entrée et une sortie pour l'écoulement de fluide à commander, un organe de commande agencé entre l'entrée et la sortie, et un élément d'actionnement pour l'organe de commande, caractérisée en ce que l'organe de commande (7) comprend un moteur à fluide à déplacement (9) traversé par l'écoulement de fluide (5), et en ce que l'élément d'actionnement (8) est agencé dans la région d'un élément de déplacement (1), déplaçable par l'écoulement du fluide (5), de ce moteur à fluide (9), et en ce que lors de l'actionnement l'élément d'actionnement (8) bloque ou libère au moins indirectement ledit élément de déplacement (1).

2. Valve selon la revendication 1, caractérisée en ce que le moteur à fluide (9) est formé par une machine à piston rotatif, de préférence selon le principe d'une pompe à engrenages ou d'un ventilateur de Roots.

3. Valve selon l'une ou l'autre des revendications 1 et 2, caractérisée en ce que l'élément de déplacement (1, 2) au moins du moteur à fluide (9) est réalisé sous la forme d'une pièce de précision massive, en particulier en céramique.

4. Valve selon l'une ou l'autre des revendications 2 ou 3, caractérisée en ce que l'élément de déplacement (1, 2), le piston rotatif et/ou le boîtier (6) du moteur à fluide (9) est composé de plaques planes dont les surfaces de délimitations extérieures sont usinées en commun, de préférence meulées ou rodées.

5. Valve selon l'une ou plusieurs des revendications 2 à 4, caractérisée en ce que l'élément d'actionnement (8) est agencé de façon excentrique par rapport à l'axe (10, 14) du piston rotatif.

6. Valve selon l'une ou plusieurs des revendications 2 à 4, caractérisée en ce que l'élément d'actionnement (8) est agencé de manière centrale vis-à-vis de l'axe (10, 14) du piston rotatif, et en ce qu'il est réalisé de préférence sous la forme d'une douille ou d'un arbre déporté.

7. Valve selon l'une ou plusieurs des revendications 1 à 6, caractérisée en ce que l'élément d'actionnement (8) comprend plusieurs éléments individuels agencés séparément.

8. Valve selon l'une ou plusieurs des revendications 1 à 7, caractérisée en ce que les éléments d'actionnement (8) sont commandés ensemble de la même manière et en sens contraire par deux moteurs à fluide (9, 9') agencés l'un derrière l'autre dans la direction d'écoulement du fluide (5).

9. Valve selon la revendication 8, caractérisée en ce que les deux moteurs à fluide (9, 9') sont agencés dans l'espace l'un à coté de l'autre, et en ce qu'on prévoit un élément d'actionnement commun (8) pour influencer les deux moteurs à fluide (9, 9') de façon égale et en sens contraire.
